Europäisches Patentamt

European Patent Office

Office européen des brevets

(19)

(11) Veröffentlichungsnummer: **0 370 339**

**A1**

(12) **EUROPÄISCHE PATENTANMELDUNG**

(21) Anmeldenummer: **89120927.2**

(22) Anmeldetag: **11.11.89**

(51) Int. Cl.5: **C09D 5/00, C09D 133/04**

(30) Priorität: **19.11.88 DE 3839177**

(43) Veröffentlichungstag der Anmeldung:
**30.05.90 Patentblatt 90/22**

(84) Benannte Vertragsstaaten:
**AT BE CH DE ES FR GB IT LI NL SE**

(71) Anmelder: **RÖHM GMBH**
**Kirschenallee**
**D-6100 Darmstadt(DE)**

(72) Erfinder: **Langerbeins, Klaus, Dr.**
**Uhlandstrasse 5b**
**D-6070 Langen(DE)**
Erfinder: **Trabitzsch, Hans, Dr.**
**Weingartenstrasse 7**
**D-6104 Seeheim-Jugenheim(DE)**
Erfinder: **Daum, Helmut**
**Heidelberger Strasse 15**
**D-6104 Seeheim-Jugenheim(DE)**

(54) **Temporäre Schutzüberzüge auf Polyacrylatbasis.**

(57) Die Erfindung betrifft temporäre Schutzüberzüge aus Acrylpolymeren, die aus wäßrigen Dispersionen von lipophilen Poly(meth)acrylaten gebildet sind, und die überwiegend aus (Meth)acrylestern von Alkoholen mit 4 und mehr C-Atomen aufgebaut sind. Die Acrylpolymeren werden vorteilhaft durch Emulsionspolymerisation hergestellt. Durch Behandlung mit organischen Lösemitteln werden die temporären Schutzüberzüge entfernt und die dabei entstehenden Lösungen in einer Verbrennungsanlage entsorgt.

EP 0 370 339 A1

## Gebiet der Erfindung

Die Erfindung betrifft temporare Schutzüberzuge technischer Körper. Sie betrifft solche Schutzüberzuge mit denen durch das Verfahren ihrer Aufbringung zusammen mit dem Verfahren ihrer Entfernung eine Minimierung der Umweltbelastung erreicht wird.

Stand der Technik

Für temporäre Schutzüberzuge besteht die Forderung, daß sie leicht entfernbar sein müssen, sobald sie ihre Aufgaben erfüllt haben. Angewendet werden sie zum zeitweiligen Oberflächenschutz technischer Gegenstände, die meist aus metallischem oder aus Kunststoff-Material bestehen. Der Schutz kann ein Witterungsschutz sein; er kann aber auch ein Schutz vor mechanischem Angriff, z.B. beim Weiterverarbeiten von Werkstücken, sein.

Das bekannteste Beispiel ist die Konservierung von Autokarosserien für Transport und für deren Lagerung im Freien, wozu herkömmlich Überzüge von Wachsen aufgetragen werden. Diese werden meist in Form von Lösungen oder Emulsionen in bzw. mit organischen Lösemitteln aufgebracht, wobei die Lösemittel verflüchtigen, die dann aus der Abluft unter hohem technischem Aufwand wieder abgetrennt werden müssen. Auch die Entkonservierung wird hier am besten durch Waschen mit organischen Lösemitteln oder wäßrigen Emulsionen derselben, durchgeführt, wonach die Lösungen gegebenenfalls nach mechanischer Abtrennung der Wasserphase am einfachsten Verbrennungsanlagen zur Erzeugung von Wärmeenergie zugeführt werden.

Für viele Anwendungen reichen die mechanischen und thermischen Eigenschaften von Wachsschutzüberzügen nicht aus. Es hat daher nicht an Bemühungen gefehlt, wiederentfernbare Schutzüberzuge mit gegenüber den Wachsschichten verbesserten Eigenschaften zu schaffen. Vorschläge betreffen dann vor allem synthetische Polymere, die zur Filmbildung geeignet sind. Als Filmbildner eignen sich dazu u.a. Acrylatpolymere, die man vorteilhaft als wäßrige Polymerdispersionen für die Bildung der Konservierungsschicht anwendet. Um auch die Entkonservierung mit wäßrigen Systemen zu bewerkstelligen, sind in der EP-B 0 082 931 und in der EP-A 0 115 694 Schutzüberzüge aus Copolymerisaten auf Acrylatbasis vorgeschlagen, die mit Comonomeren, die Gruppen zur Salzbildung, wie z.B. Carboxylgruppen enthalten, hergestellt sind, und die mit wäßrigen Systemen, z.B. durch Behandlung mit wäßrigem Alkali, entkonserviert werden.

Das Problem dieser Verfahren ist die Entsorgung des bei der Entkonservierung anfallenden Abwassers. Die darin gelösten Polymere sind biologisch nicht abbaubar und so in einer herkömmlichen Kläranlage nicht aus dem Wasser entfernbar. Erst in zusätzlichen Operationen, wie Ansäuern, Ausfällen als schwerlösliche Metallsalze von z.B. Calcium oder Aluminium oder Eisen und Entschlammen, läßt sich das Polymerisat aus dem Wasser abtrennen, wobei dieses aber wieder mit anderen Stoffen kontaminiert wird.

Auch die Entsorgung von aus der EP-B 0 124 849 bekannten wäßrigen Entkonservierungslaugen mit ihren Gehalten an schwer abbaubaren, für die Entkonservierung notwendigen organischen Zusätzen, ist praktisch gleich dem vorstehend beschriebenen Verfahren gelagert. Nach der japanischen Patentschrift 80 115 745 (Ref.: C.A. 94 32 357 d) wird eine aus einer organischen Lösung hergestellte Schutzschicht durch Behandlung mit Gasolin entfernt. Diese Art der Schutzschichtherstellung ist wieder mit den schon oben geschilderten Nachteilen behaftet.

Aufgabe und Lösung

Der Erfordernis, einer verbesserten Entsorgung von bei der Anwendung temporärer Polyacrylat-Schutzüberzüge anfallender Stoffe, wie Dispersionsmedien, Lösemitteln und des ausgedienten Schutzschichtpolymerisats, zu entsprechen, wurde gefunden, daß temporäre Schutzüberzuge aus Acrylpolymeren, die aus ihrer wäßrigen Dispersion heraus gebildet werden, und die durch Behandlung mit verbrennbaren organischen Lösemitteln bei Bedarf wieder entfernt werden können, eine Verringerung der Umweltbelastung beim Umgang mit temporären Schutzüberzügen bringen.

Die Erfindung betrifft daher:

Temporäre Schutzüberzüge aus Acrylpolymeren,

dadurch gekennzeichnet,

daß die Acrylpolymerisat-Schutzschicht auf dem zu schützenden Körper aus einer wäßrigen Dispersion von Acrylpolymeren gebildet ist, und diese bei Bedarf durch Behandlung mit verbrennbarem organischem Losemittel entfernt wird.

Acrylpolymere, die diese Merkmale zusammengenommen erfüllen, sind Copolymerisate aus Acrylsäureestern und/oder Methacrylsäureestern. Es hat sich gezeigt, daß vor allem Copolymerisate mit einem relativ hohen Anteil aus (Meth)acrylsäureester-Monomeren mit 4 und mehr C-Atomen im Esterrest für den erfindungsgemäßen Einsatz geeignet sind.

Vorteile der Erfindung

Die Copolymerisate, die den erfindungsgemäßen Schutzüberzügen zugrundeliegen, sind bei Temperaturen bis zu 0 Grad C filmbildend und haben eine Glastemperatur Tg um 0 Grad C, bzw. größer 0 Grad C, beispielsweise 10 -15 Grad C. Sie sind wetterfest, d.h. sie sind in (Regen)-Wasser unlöslich und bleiben auch bei starker Sonneneinstrahlung, d.h. bei Temperaturen von ca. 60 bis 80 Grad C, im Gegensatz zu den temperaturempfindlicheren Wachsüberzügen, stabil. Der Aufbau des Copolymerisats aus Monomeren, d.h. insbesondere aus Methacrylsäureestern, die als solche schon eine hohe Löslichkeit in Kohlenwasserstoffen, z.B. n-Hexan, aufweisen, bedingt, daß die Schutzschicht nach Erfüllung ihrer Funktion durch Behandlung mit verbrennbaren organischen Lösemitteln, z.B. mit Kohlenwasserstoffen abgelöst werden kann, und eine solche Losung dann einer Verbrennungsanlage zugeführt wird, um durch eine solche Beseitigung die Umweltbelastung so gering wie möglich zu halten.

Die Konservierung und die Entkonservierung technischer Objekte, wie z.B. Personenautos, können mit den erfindungsgemäßen temporären Überzügen in herkömmlichen Anlagen erfolgen. Bei der Auftragung der wäßrigen Dispersion und bei deren Filmbildung wird nur Wasser, in flüssigem und dampfförmigem Zustand, abgeführt. Bei der Entkonservierung kann das organische Lösemittel bzw. die das Copolymerisat enthaltende organische Lösung, gegebenenfalls zusammen mit Wasser, solange im Kreis geführt werden, bis ihre Reinigungsleistung deutlich nachläßt. Die gegebenenfalls vorhandene wäßrige Phase, die in der technischen Durchführung 50 bis 95 Gew.-% des Entkonservierungsmediums ausmachen kann, wird vor der Weiterleitung der organischen Phase zur Verbrennung, abgetrennt. Bei dieser Entsorgung werden die Polymeren, da sie praktisch nur aus den Elementen C,H und O bestehen und als solche verbrennbar sind, mit dem Lösemittel zu den Verbrennungsprodukten $CO_2$ und $H_2O$ abgebaut, und führen durch diese Verarbeitung in einer Wärmegewinnungsanlage zu keiner zusätzlichen Belastung der Atmosphäre.

Durchführung der Erfindung

Die erfindungsgemäß zu verwendenden Acrylpolymeren werden in wäßriger Dispersion zur Filmbildung auf den zu schützenden Gegenständen aufgebracht und werden dazu bevorzugt als wäßriges Emulsionspolymerisat hergestellt und in dieser Form zur Konservierung eingesetzt. Die Polymerisate sind vorteilhafterweise Emulsionspolymerisate bzw. Copolymerisate von im wesentlichen Acrylsäureestern und/oder Methacrylsäureestern, die eine entsprechend für das Merkmal der Entkonservierung benötigte Lipophilie der Schutzschicht erbringen. Das hydrophob eingestellte Polymerisat kann aber auch geringe Mengen weniger lipophile, ja sogar ausgesprochen hydrophile Monomere als Bausteine enthalten. Solche hydrophilen Monomere sind beispielsweise polymerisierbare Carbonsäuren, wie Acrylsäure, Methacrylsäure, Maleinsäure oder deren Anhydrid, Itakonsäure(anhydrid) oder Monomere mit basischen Gruppen, wie N-Dimethylaminoethylmethacrylat, N-[3-(Dimethylamino)-2,2-dimethylpropyl]methacrylamid oder Monomere mit hydrophilen Alkoholen im Esterrest, wie beispielsweise 2-[2-(2-Ethoxiethoxi)ethoxi]ethylmethacrylat. Sie sind im Mengen unter 10 Gew.-%, bevorzugt unter 5 Gew.-%, bis 0 Gew.-%, im Polymerisat eingebaut. Der Einbau solch polarer Monomerer in geringen Mengen wirkt sich auf die Stabilität der polymerhaltigen Dispersion positiv aus, in dem dadurch einer Verklumpung entgegengewirkt wird. Die so erreichten Langzeitstabilitäten sind für den Transport und die Lagerung der für erfindungsgemäße temporäre Schutzüberzüge benötigten Acrylpolymerdispersionen wesentlich.

Bei dem lipophilen Anteil handelt es sich überwiegend bis ausschließlich um Ester der Acryl- bzw. Methacrylsäure. Daneben können aber auch noch andere Comonomere in solchen Anteilen mitverwendet werden, daß die gewünschten Eigenschaften der Polymerisate, wie die gewünschten mechanischen und die für die erfindungsgemäße Entkonservierung gewünschten Löse- bzw. Ablöseeigenschaften eingehalten werden.

Als Ester der Acryl- bzw. Methacrylsäure, die für die Herstellung des erfindungsgemäßen Schutzüberzuges besonders geeignet sind, kommen in erster Linie die Ester der Alkohole mit 4 und mehr Kohlenstoff-

3

atomen im Alkoholrest der Estergruppe, beispielsweise $C_4$- bis $C_{24}$-Alkohole, in Frage. Die Ester können sich von geradkettigen oder verzweigten Alkylalkoholen, aber auch von Cycloalkylalkoholen, die weiter alkylsubstituiert sein können, herleiten. Auch höhere (Meth)acrylester, die mit technischen Gemischen von Alkoholen, z.B. einem $C_{10}$- bis $C_{20}$-Alkoholgemisch mit einer mittleren C-Zahl von 16.2 bis 17.2, hergestellt sind, sind als Monomere für die Herstellung der erfindungsgemäßen temporären Schutzüberzüge vorteilhaft brauchbar. Weiter sind auch Acryl- und Methacrylester mit aromatischen Gruppen im Alkoholrest als lipophile Monomere brauchbar. Aus preistechnischen und ökologischen Gründen wird ihr Einsatz in der Erfindung jedoch nur in beschränktem Umfang erwogen.

Acryl- und Methacrylester, die sich von Alkoholen mit weniger als 4 C-Atomen im Esterrest ableiten, sind ebenfalls als Comonomere brauchbar, wobei darauf zu achten ist, daß insbesondere der Anteil der entsprechenden Methacrylester, vor allem des Methylmethacrylats, in dem Copolymerisat nicht zu hoch sein soll, d.h. in der Regel 40 bis 50 Gew.-% bezogen auf das Gesamtpolymerisat nicht überschreitet. Diese mitpolymerisierten Monomeren könnten ansonsten einmal eine zu hohe Glastemperatur und damit eine nicht erwünschte Sprödigkeit des Überzuges bewirken und zum anderen eine unzureichende Löslichkeit bzw. Ablösbarkeit des Überzuges mit organischen Lösemitteln, wie z.B. mit Kohlenwasserstoffen wie Hexan oder Benzin, ergeben.

Das Acrylpolymerisat ist wesentlich, d.h. aus 70 bis 100 Gew.-%, vor allem aus 80 bis 99 Gew.-% und besonders aus 90 bis 98 Gew.-%, aus Estern der Acryl- und/oder Methacrylsäure, mit überwiegend, d.h. aus 51 bis 100 Gew.-%, vor allem aus 60 bis 99 Gew.-% und besonders aus 70 bis 98 Gew.-%, (Meth)acrylestern von Alkoholen mit 4 und mehr C-Atomen aufgebaut. Neben den Acryl- bzw. Methacrylverbindungen können weitere $\alpha,\beta$-ungesättigte Verbindungen, z.B. Styrol, $\alpha$-Methylstyrol, Vinylacetat als Comonomere in dem Emulsionspolymerisat und damit in der temporären Schutzschicht eingebaut sein. Im allgemeinen liegt ihr Anteil dann bei 0 bis 30 Gew.%, vor allem bei 0 bis 10 Gew.-%.

Als Acryl- und Methacrylester für die Herstellung der Acrylpolymerisat-Schutzschicht werden beispielsweise eingesetzt:

Ethylacrylat, Isopropylacrylat, Methylmethacrylat, Ethylmethacrylat, und vor allem solche mit Alkoholresten im Esterrest mit 4 und mehr C-Atomen, wie beispielsweise n-Butylacrylat, Isobutylacrylat, n-Butylmethacrylat, Isobutylmethacrylat, n-Hexylmethacylat, 2-Ethylhexylacrylat, 2-Ethylhexylmethacrylat, n-Dodecylmethacrylat, $C_{16.2 - 17.2}$-Methacrylester (z.B. von ® Stenol 1220 P, einem Fettalkohl der Fa. Dehydag), Cyclohexylmethacrylat, 3,3,5-Trimethylcyclohexylmethacrylat.

Erfindungsgemäße Schutzschichten sind aus wäßrigen Dispersionen von Acrylpolymeren gebildet. Daher stellt man die wäßrigen Acrylpolymerdispersionen am vorteilhaftesten durch Polymerisation der dafür geeigneten Monomeren in wäßriger Emulsion, teilweise auch in Suspension, nach einschlägig bekannten Verfahren her (s. dazu H. Rauch-Puntigam, Th. Völker, "Acryl- und Methacrylverbindungen", Seiten 217 bis 228, Springer-Verlag, Heidelberg 1967; Ullmann's Encyclopädie der technischen Chemie, 4. Auflage, Band 19, Seiten 11 bis 14 und 125 bis 141, Verlag Chemie 1980).

Die Emulsionspolymerisation wird mit den dafür bekannten, allgemein üblichen, nichtionischen, kationischen und anionischen Emulgatoren, wie z.B. den Alkali- und Ammoniumsalzen von sulfatierten Fettalkoholen, aromatischen Sulfonsäuren oder sulfierten Ethylenoxidaddukten durchgeführt.

Geeignete anionische Emulgatoren sind z.B. sulfierte und mit Alkali neutralisierte, oxethylierte Alkylphenole, die z.B. aus Nonylphenol- oder Triisobutylphenoladdukten mit 3 bis 30 Ethylenoxideinheiten pro Molekül hergestellt sein können.

Es kann nach dem Batchverfahren oder nach einem Zulaufverfahren wie dem Monomerzulauf- oder dem Emulsionszulaufverfahren vorgegangen werden. Mit besonderem Vorteil bedient man sich des Emulsionszulaufverfahrens. Bei diesem Verfahren wird nur ein Teil der Wasserphase, in der Regel 10 bis 70 % der Gesamtmenge im Polymerisationsgefäß vorgelegt. Im verbleibenden Teil der Wasserphase, die in der Regel einen Teil des Emulgiermittels enthält, wird die Monomerenphase unter Bedingungen, unter denen noch keine Polymerisation eintritt, emulgiert und die entstehende Emulsion wird allmählich in das Reaktionsgefäß eingeführt, wo Polymerisationsbedingungen herrschen.

Die Verfahren können in mannigfaltiger Weise abgewandelt werden. So kann man z.B. den Initiator oder einen Teil des Emulgiermittels getrennt von der Monomerenphase allmählich zulaufen lassen oder portionsweise eintragen. Als Polymerisationsinitiator wird überwiegend Alkali- oder Ammoniumpersulfat verwendet, jedoch können daneben oder stattdessen auch andere, vorzugsweise wasserlösliche Initiatoren, wie z.B. 4,4'-Azobis-4,4'-dicyano-Valeriansäure oder Redoxsysteme, wie Persulfate, Sulfoxyverbindungen und Eisensalze oder Wasserstoffperoxyde und Eisen-II-Salze, eingesetzt werden. Die letzteren werden getrennt von der Monomerenphase zugesetzt, da sie schon bei Raumtemperatur die Polymerisation auslösen. Die Umsetzungstemperatur richtet sich nach der Zerfallstemperatur des Initiators und liegt im allgemeinen zwischen 10 und 100 Grad C.

Die Polymerisatkonzentration in den Dispersionen liegt bei deren Herstellung im Bereich von etwa 30 bis 70 Gew.-% Feststoff und die Viskositaten der Polymerdispersionen liegen im allgemeinen im Bereich von 10 bis 5 000 mPa•s (ISO 2555).

Die Teilchengröße der Emulsionspolymerisate liegt vorteilhaft im Bereich von 20 bis 600 nm, vorzugsweise im Bereich von 50 bis 400 nm. (Bestimmung durch Photonenkorrelationsspektroskopie, auch als Autokorrelationsspektroskopie bekannte mit dem Nano-Sizer [TDM] der Firma Coulter Electronics, Ltd., Luton, Beds.)

Die Polymerisate haben in der Regel minimale Filmbildungstemperaturen (MFT) im Bereich von 0 Grad C bis ca. 30 Grad C, beispielsweise solche von ca. 0 Grad C bis 20 Grad C. (Ullmanns Encyklopädie der technischen Chemie, 4. Auflage, Band 19, Seiten 17, 18 und 141; DIN 53 787).

Bei der Konservierung wird die wäßrige Polymerdispersion auf den zu schützenden Gegenstand appliziert. Dazu werden vorteilhaft Polymerdispersionen, die als solche hergestellt werden, gegebenenfalls nach Verdunnung mit Wasser, eingesetzt.

Die Aufbringung der Überzüge kann nach den gängigen Verfahren, wie durch Tauchen, durch Aufsprühen mit einer handgeführten Spritzpistole oder auch maschinell, wie z.B. bei der Konservierung von Autokarosserien üblich, durchgeführt werden. Durch Führung der beschichteten Teile durch einen Trockentunnel können diese schnell von anhaftendem Wasser befreit werden. Die Trocknung kann bei Temperaturen von etwa 20 Grad C bis ca. 80 Grad C, oder bei noch etwas höheren Temperaturen, vorteilhaft in Gegenwart eines mitgeführten Gases, insbesondere mit Luft durchgeführt und beschleunigt werden.

Die Entkonservierung wird erfindungsgemäß mit einem verbrennbaren Lösemittel bzw. einem Lösemittelgemisch, in dem die Acrylpolymerisat-Schutzschicht in ausreichendem Maße bis gut löslich sein sollen, durchgeführt. Dabei kann das Lösemittel(gemisch) durch Emulgieren in Wasser verdünnt Werden. Acrylpolymere, wie sie oben beschrieben sind, und die im wesentlichen aus (Meth)acrylestern mit Alkoholen aus 4 und mehr C-Atomen im Esterrest hergestellt werden, sind in gängigen Lösemitteln wie Carbonsäureestern, wie z.B. in Essigsäureestern oder in Kohlenwasserstoffen, wie z.B. Hexan oder anderen Kohlenwasserstoffen, auch Gemischen derselben, wie z.B. Benzin, gut löslich. Sowohl diese angeführten Lösemittel als auch die nach der Entkonservierung darin gelösten bzw. angelösten Acrylpolymeren sind in einer Verbrennungsanlage vollständig zu $CO_2$ und $H_2O$ verbrennbar. Halogenhaltige oder z.B. auch Nitrogruppen-haltige Kohlenwasserstoffe verbieten sich als Lösemittel, da sie nicht einfach und umweltfreundlich entsorgt werden können. Bevorzugt sind Lösemittel, die keine oder nur geringe Mengen an Aromaten enthalten, überwiegend aus den Elementen C und H bestehen und gegebenenfalls weiter noch Gruppen mit O als Atom enthalten können. Die organischen Lösemittel können wie in der derzeitigen Praxis meist üblich durch Emulgieren in Wasser verdünnt werden.

Die Entkonservierung wird nach den derzeit meist geübten Vorgehensweisen, das sind die gleichen oder ähnliche wie für die Konservierung beschriebenen Methoden, wie beispielsweise Tauchen oder Sprühen, durchgeführt. Dabei werden die Gegenstände mit Lösemitteln oder deren Emulsionen mit Wasser als mobilen Phasen, von den Acrylpolymerisat-Schutzüberzügen befreit.

Die folgenden Beispiele dienen zur Erläuterung der Erfindung.

## BEISPIELE

Allgemeine Vorschrift zur Dispersionsherstellung und Beispiel 1

In einem 2 1-Reaktionsgefäß, ausgerüstet mit Rückflußkühler, Rührwerk und Zulaufgefäß, werden 0,54 g Paraffinsulfonat-Na-Salz und 0,216 g Ammoniumperoxidisulfat in 435 g entsalztem Wasser bei 20 Grad C gelöst. In diese Lösung wird eine Emulsion aus:

489,6 g 2-Ethylhexylmethacrylat
216,0 g 3,3,5-Trimethylcyclohexylmethacrylat
14,4 g Methacrylsäure
8,1 g Paraffinsulfonat-Na-Salz
7,2 g 2-Ethylhexylthioglykolat und
670,0 g entsalztes Wasser

bei 80 Grad C unter Rühren innerhalb von 4 Stunden zudosiert. Nach Zulaufende wird der Ansatz auf Raumtemperatur abgekühlt, hierbei erfolgt bei 70 Grad C die Zugabe von 0,45 g 1,4-Diisopropylbenzolmonohydroperoxid und 0,36 g Natriumformaldehydsulfoxylat. Dann wird die Dispersion filtriert. Der Trockengehalt der Dispersion beträgt ca. 40 %.

Zur Dispersionscharakterisierung vgl. in Tabelle.

EP 0 370 339 A1

Weitere Polymerisate (s. Tabelle, Beispiele 2 bis 7) werden in entsprechender Weise hergestellt. Aus den Dispersionen der Beispiele 1 bis 7 hergestellte Polymerisatfilme sind beispielhaft für brauchbare organische Lösemittel in n-Hexan löslich.

| Beispiel Nr. | Polymerzusammensetzung | MFT[1] | pH | Brookfield-Visk.[2] | Teilchengröße[3] |
|---|---|---|---|---|---|
| | | (°C) | | (mPa•s) | (nm) |
| 1 | B - A - E 68 30 2 | 16 | 3,5 | 89 | 170 |
| 2 | B - A 75 25 | 19 | 3,0 | 170 | 145 |
| 3 | B - D - E 49 49 2 | 0 | 3,5 | 35 | 175 |
| 4 | D - B - A - E 35 33 30 2 | 0 | 3,5 | 33 | 170 |
| 5 | B - C - E 68 30 2 | 7 | 3,8 | 26 | 220 |
| 6 | F - A - E 68 30 2 | 0 | 3,4 | 142 | 125 |
| 7 | B - A - G 65 30 5 | 16 | 3,0 | 1400 | 380 |

A: 3,3,5-Trimethylcyclohexylmethacrylat

B: Ethylhexylmethacrylat

C: Isobutylmethacrylat

D: Ethylhexylacrylat

E: Methacrylsäure

F: Butylacrylat

G: Acrylsäure

1) DIN 57 787
2) nach ISO 2555
3) bestimmt mit Nano-Sizer[TDM], Coulter Electronics Ltd.

**Ansprüche**

1. Temporäre Schutzüberzüge aus Acrylpolymeren, dadurch gekennzeichnet, daß die Acrylpolymerisat-Schutzschicht auf dem zu schützenden Körper aus einer wäßrigen Dispersion eines lipophilen Poly(meth)acrylatpolymeren gebildet ist, und diese bei Bedarf durch Behandlung mit verbrennbarem organischem Lösemittel entfernt wird.

2. Temporare Schutzüberzüge aus Acrylpolymeren nach Anspruch 1, dadurch gekennzeichnet, daß das Poly(meth)acrylatpolymer aus 70 bis 100 Gew.-%, vor allem aus 80 bis 99 Gew.-% und besonders aus 90 bis 98 Gew.-%, aus Estern der Acryl- und/oder Methacrylsäure, mit überwiegend, d.h. aus 51 bis 100 Gew.-%, vor allem aus 60 bis 99 Gew.-% und besonders aus 70 bis 98 Gew.-%, (Meth)acrylestern von Alkoholen mit 4 und mehr C-Atomen aufgebaut ist.

3. Temporare Schutzüberzüge aus Acrylpolymeren nach den Ansprüchen 1 und 2, dadurch gekennzeichnet, daß das lipophile Poly(meth)acrylatpolymer, hydrophile Comonomere wie polymerisierbare Carbonsäuren oder Monomere mit basischen Gruppen, in Mengen unter 10 Gew.-% bis 0 Gew.-% eingebaut enthält.

4. Temporare Schutzüberzüge aus Acrylpolymeren nach den Ansprüchen 1 bis 3, dadurch gekennzeichnet, daß das lipophile Poly(meth)acrylatpolymer weitere α,ß-ungesättigte Verbindungen in Mengen von 0 bis 30 Gew.-% eingebaut enthält.

5. Temporäre Schutzüberzüge aus Acrylpolymeren nach den Ansprüchen 1 bis 4, dadurch gekenn-

6

zeichnet, daß deren Entfernung mit einem Lösemittel durchgeführt wird, das nach Zuführung mit dem darin enthaltenen Acrylpolymer in einer Verbrennungsanlage vollständig zu $CO_2$ und $H_2O$ verbrennbar ist.

6. Temporare Schutzüberzüge aus Acrylpolymeren nach den Ansprüchen 1 bis 5, dadurch gekennzeichnet, daß deren Entfernung durch Behandlung mit einer Wasser-Lösemittel-Emulsion durchgeführt wird, und das Wasser vor Zuführung der organischen Bestandteile in eine Verbrennungsanlage, abgetrennt wird.

7. Verfahren zur Herstellung eines lipophilen Poly(meth)acrylats, das als temporärer Schutzüberzug auf einen Gegenstand durch dessen Behandlung mit einer wäßrigen Dispersion desselben aufgebracht wird, dadurch gekennzeichnet,

daß es durch Polymerisation von Estern der Acrylsäure und/oder der Methacrylsäure, die überwiegend Ester von Alkoholen mit 4 und mehr C-Atomen sind, in wäßriger Emulsion hergestellt wird.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A,D | CHEMICAL ABSTRACTS, Band 94, 1981, Zusammenfassung Nr. 32357d; & JP-A-80 115 475 (NITTO ELECTRIC) 05-09-1980 --- | 1-7 | C 09 D    5/00 C 09 D 133/04 |
| A,D | EP-B-0 082 931  (HENKEL) ----- | | |

**RECHERCHIERTE SACHGEBIETE (Int. Cl.5)**

C 09 D
C 08 L

Der vorliegende Recherchenbericht wurde für alle Patentansprüche erstellt

| Recherchenort | Abschlußdatum der Recherche | Prüfer |
|---|---|---|
| DEN HAAG | 22-02-1990 | WILSON A.J.D. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
.............................................................
& : Mitglied der gleichen Patentfamilie, übereinstimmendes Dokument